Europäisches Patentamt

European Patent Office

Office européen des brevets

(19)

(11) Veröffentlichungsnummer: **0 314 914**
**A2**

(12) ## EUROPÄISCHE PATENTANMELDUNG

(21) Anmeldenummer: 88115721.8

(22) Anmeldetag: 23.09.88

(51) Int. Cl.4: **B60K 5/12** , **B60K 23/02**

(30) Priorität: 06.11.87 DE 3737800

(43) Veröffentlichungstag der Anmeldung:
10.05.89 Patentblatt 89/19

(84) Benannte Vertragsstaaten:
DE ES FR GB IT

(71) Anmelder: WOCO Franz-Josef Wolf & Co.
Sprudelallee 19
D-6483 Bad Soden-Salmünster(DE)

(72) Erfinder: Wolf, Franz Josef
Sprudelallee 19
D-6483 Bad Soden-Salmünster(DE)
Erfinder: Pletsch, Hubert
Am Quellenrain 13
D-6483 Bad Soden-Salmünster(DE)

(74) Vertreter: Jaeger, Klaus, Dipl.-Chem. Dr. et al
Jaeger, Steffens & Köster Patentanwälte
Pippinplatz 4a
D-8035 München-Gauting(DE)

(54) **Kraftfahrzeug.**

(57) Bei einem Kraftfahrzeug herkömmlicher Bauart mit einer Trennkupplung im Antriebsstrang kann dadurch eine Verbesserung des Fahrkomforts, insbesondere ein Unterdrücken des Nachschlagens des Motors oder Triebwerks erzielt werden, daß eine möglichst weiche Motorlagerung bzw. Lagerung des Antriebsaggregates mit einer drehstarren ungefederten Kupplung kombiniert wird.

EP 0 314 914 A2

## Kraftfahrzeug

Die Erfindung betrifft ein Kraftfahrzeug der im Oberbegriff des Anspruchs 1 genannten Art.

Insbesondere betrifft die Erfindung ein Personenkraftfahrzeug mit Verbrennungsmotor und einer Trennkupplung im Antriebsstrang, bei dem der Motor bzw., je nach Bauart des Kraftfahrzeugs, das Antriebsaggregat über weiche Lagerfedern auf der Karosserie des Fahrzeugs abgestützt ist.

Bereits seit den ersten Anfängen des serienmäßigen Personenkraftfahrzeugbaus waren die Konstrukteure darum bemüht, ein Maximum an Fahrkomfort für die Benutzer eines Kraftfahrzeuges zu schaffen. Bereits bei den ersten überhaupt gefertigten Serienfahrzeugen wurde erkannt, daß nicht nur eine optimierte Abstützung der Aufbaumasse auf der Radmasse, sondern die Abstützung des Motors für eine Optimierung des Fahrkomforts von wesentlicher Bedeutung ist. Dementsprechend wurden bereits bei diesen frühen Kraftfahrzeugen die Motoren auf Gummipuffern relativ hart gelagert.

Nach diesen ersten Anfängen der Erarbeitung eines komfortablen Fahrens, insbesondere in Personenkraftwagen, wurde der zunächst vollkommen ungefederten Kupplung verstärkte Aufmerksamkeit gewidmet. Um ein weicheres Anfahren zu ermöglichen und um Stöße im Betrieb aufzufangen, wurden allmählich Kupplungen entwickelt, bei denen nicht nur der Einkupplungsvorgang selbst über Federsysteme aufgefangen wurde, sondern auch im eingekuppelten Betriebszustand auftretende Laststöße drehelastisch aufgefangen werden konnten. Auf diese Weise wurden bereits relativ früh die in zahllos verbesserten Ausführungen noch heute gebräuchlichen Kupplungen entwickelt, die zumindest im wesentlichen durch Belagfedern, drehelastische Vorfedern und drehelastische Betriebsfedern gekennzeichnet sind. Dabei werden die Abstimmungen in der Weise vorgenommen, daß ein insgesamt möglichst drehweiches Verhalten der Trennkupplung erzielt wird. Dies gewährleistet sowohl ein weiches Anfahren als auch ein relativ weiches und sanftes Verhalten des Kraftfahrzeugs bei abruptem Lastwechsel im Fahrbetrieb bei eingerückter Kupplung.

Das so entwickelte Konzept eines Kraftfahrzeugs mit relativ hart federnd gelagertem Motor und weicher drehelastischer Kupplung erwies sich als gute und zufriedenstellende Lösung für alle relativ großen Motoren mit relativ hoher Drehzahl. Mit dem zunehmenden Energiebewußtsein sowohl auf Seiten der Konstrukteure als auch auf Seiten der Verbraucher haben sich in den letzten Jahren die Entwicklungsbemühungen im Motorenbau jedoch deutlich geändert. Die Entwicklung von Motoren mit möglichst niedrigen Drehzahlen sowohl im Leerlauf als auch unter Betriebslast erlangte eine hohe Priorität. Auch für die herkömmlichen Motortypen ist man bemüht, diese für einen Betrieb bei möglichst niedrigen Drehzahlen einzustellen. Notgedrungen führt diese Tendenz zur niedrigen Drehzahl jedoch verstärkt zu einem stärkeren Rütteln oder Schlagen des Motorblocks bzw. des Antriebsblocks. Um durch diese verstärkte Rüttelbewegung des Motors den Fahrkomfort nicht zu beeinträchtigen, haben die Schwingungstechniker in den letzten Jahren zunehmend weichere Motorlager entwickelt (DE 35 35 897 A1). Diesem prinzipiellen Bestreben, den Motor bzw. das Antriebsaggregat eines modernen Kraftfahrzeugs möglichst weich zu lagern sind jedoch durch die dabei zu berücksichtigenden relativ großen Amplituden und die Gefahr des "Aufschaukelns" der Motorschwingungen durch Überlagerungen Grenzen gesetzt. Dies hat letztlich zu der heute gebräuchlichen Praxis der prinzipiell möglichst weichen Motorlagerung mit abgestimmter Dämpfung der Motorlagerung geführt.

Die Fahrerfahrung mit Kraftfahrzeugen dieser Art, bei denen der Motor oder das Antriebsaggregat weich gefedert und abgestimmt gedämpft gelagert ist und die im Antriebsstrang eingebaute Trennkupplung möglichst drehweich ausgelegt ist, zeigt im Hinblick auf den Gesamtfahrkomfort des Fahrzeugs bei abruptem Lastwechsel eine störende Erscheinung, die als "Nachschlagen" des gesamten Antriebssystems bezeichnet wird. Bei abruptem Lastwechsel macht sich im Fahrbetrieb bei eingerückter Kupplung ein Schwingen des Antriebssystems bemerkbar, das insbesondere als Doppelschlag spürbar ist. Dieses Lastwechselnachschlagen führt dann häufig zu Folgeschwingungserscheinungen, die das Fahrverhalten des Kraftfahrzeugs ungünstig beeinflussen.

Mit dem Ziel der Verbesserung des Fahrkomforts sind daher Ansätze bekannt, drehweiche Trennkupplungen mit abgestimmtem Dämpfungsverhalten zu schaffen. Insgesamt konnte mit diesen gedämpften drehweichen Trennkupplungen jedoch bislang noch keine wesentliche Unterdrückung des vorstehend beschriebenen Lastwechselnachschlagens erzielt werden.

Ausgehend von diesem Stand der Technik liegt der Erfindung die Aufgabe zugrunde, ein Kraftfahrzeug bezüglich dessen Fahrkomfort dahingehend weiter zu verbessern, daß das Lastwechselnachschlagen unterdrückt bzw. vollständig aufgehoben wird, ohne die akustischen Eigenschaften zu beeinträchtigen.

Zur Lösung dieser Aufgabe wird durch die Er-

findung ein Kraftfahrzeug der eingangs genannten Art mit den im kennzeichnenden Teil des Anspruchs 1 genannten Merkmalen versehen.

Die Erfindung beruht also wesentlich auf dem zunächst scheinbar völlig abwegigen Gedanken, das den Fahrkomfort eines Kraftfahrzeugs störende Stoßen und Nachschlagen des Antriebssystems eines Kraftfahrzeugs nicht wie beim Motor durch ein abgestimmtes Dämpfen einer prinzipiell möglichst weich drehgefederten Kupplung zu erreichen, sondern im Gegenteil gerade dadurch, daß die Trennkupplung wieder wie in den ersten Tagen der Kraftfahrzeugtechnik vollkommen starr und ungefedert, insbesondere und vorzugsweise auch ohne Vorfeder und ohne Belagfeder, ausgebildet wird. Das durch diese Maßnahme erzielte Ergebnis einer völlig überraschenden drastischen Verbesserung des Fahrkomforts ist umso erstaunlicher, als erste Versuche das Nachschlagen des Motors oder Triebwerkes dadurch zu unterdrücken, daß der Motorblock oder Antriebsblock selbst sehr steif gefedert oder starr gelagert wurde, zu vollkommen unerwünschten und untragbaren Ergebnissen führten.

Erste Untersuchungen der durch die erfindungsgemäße Kombination der starren ungefederten Trennkupplung mit einem prinzipiell möglichst weich federnd gelagerten Motor oder Antriebsaggregat erzielbaren Verbesserungen des Fahrkomforts lassen erkennen, daß durch diese Maßnahme zwei gleichsinnig wirkende Effekte erzielt werden: (1) Die zwischen einem weichen Motorlager und einem weichen Kupplungsfedersystem schwingungstechnisch unabgestimmt und unkontrolliert "schwimmenden" Teile des Antriebssystems sind wieder auf ein abgestimmtes Lagersystem zurückgeführt und gelagert, nämlich auf den Motorlagern und unterliegen damit keinen unkontrollierten Schwingungsvorgängen mehr; und (2) für sämtliche an der Kupplung wirksamen Lastwechselvorgänge, also auch beim Einkuppeln, wirkt der gesamte Motor bzw. das gesamte Triebwerksaggregat als Massendämpfer.

Mit anderen Worten, durch die erfindungsgemäße Kombination der weichen Motorlagerung und starren federlosen Kupplung werden an der Kupplung auftretende Lastwechseländerungen nicht nur extrem stark gedämpft, sondern gleichzeitig über die Motorlager außerordentlich weich gefedert. Ganz abgesehen davon, daß durch diese Maßnahmen ein bislang für Personenkraftwagen mit Trennkupplungen nicht erreichter Fahrkomfort erzielbar ist, ist durch die Erfindung auch eine wesentliche Verbilligung der Trennkupplungen selbst erreichbar, da trotz des Zugewinns an Fahrkomfort auf bis zu drei Federsysteme verzichtet werden kann, nämlich auf die die Drehelastizität erzeugenden Hauptfedern, auf die vor allem beim Einkuppeln wirkenden Vorfedern und auf die Belagfedern.

**Ansprüche**

1. Kraftfahrzeug mit einer Trennkupplung im Antriebsstrang und einer Lagerung des Motors oder Triebwerkaggregats auf weichen Lagerfedern, **gekennzeichnet** durch eine drehstarre ungefederte Kupplung.

2. Kraftfahrzeug nach Anspruch 1, **gekennzeichnet** durch eine Reibkupplung ohne Belagfeder.